# EUROPEAN PATENT APPLICATION

(11) **EP 2 639 524 A1**
(43) Date of publication of application: **18.09.2013**
(21) Application number: 12305291.2
(22) Date of filing: 13.03.2012
(51) Int. Cl.: F24J 2/10, F24J 2/16, F24J 2/54

(54) **A solar concentrator for a solar energy collector having improved drive assembly**

(71) Applicant: Areva Solar, Inc, Mountain View CA 94043 (US)
(72) Inventor: Hoermann, Alexander, Menlo Park, California 94025 (US); Ray, Forest, Saint Philadelphia, Pennsylvania 19147 (US)
(74) Representative: Domenego, Bertrand

(57) **Abstract**

This solar concentrator comprises at least one row (12) of reflectors (14), said row extending along a longitudinal direction (L) and being pivotally supported with respect to the ground to pivot around a longitudinal pivot axis (A-A), and a drive system (38) for pivotally driving at least on reflector (14) of said row (12), said drive system (38) comprising:
- a hoop member (50) having a peripheral surface 52 extending around said pivot axis (A-A),
- a motor (54)
- a rotary drive member (56) coupled to the motor (54),
- an elongated flexible transmission member (58) wrapped around said peripheral surface (52) and engaging the drive member (56).

The transmission member (58) engages with at least one engagement member (70) affixed to the peripheral surface (52) such that the transmission member (58) is diverted from the peripheral surface to engage the drive member (56) between to points (68) of the peripheral surface (52) defining an angle (α) with respect to the pivot axis (A-A) axis equal or less than 60°, preferably equal or less than 30°, more preferably equal or less than 20°.

## Description

The present invention generally relates to a solar concentrator for a solar energy collector.

A solar energy collector may comprise a receiver for converting solar energy into another form of energy and a solar concentrator for concentrating incident solar radiations to the receiver.

The receiver may be adapted for circulation of a heat transfer fluid for converting solar energy into another thermal energy. Such a receiver generally comprises tubes for circulation of the heat transfer fluid to be subjected to concentrated solar radiations.

The solar concentrator may comprise at least one row of reflector extending in a longitudinal direction, the reflectors being pivotally supported about a pivot axis A-A with respect to the ground to track the diurnal sun's motion and reflect the incident solar radiations towards the receiver.

The solar concentrator may comprise a drive assembly for pivoting the reflectors about the longitudinal axis.

WO 2009/029275 discloses a drive assembly comprising a hoop-shaped drive member having a peripheral surface extending around the longitudinal axis, a motor having a drive gear and a belt shaped member wrapped around said peripheral surface for transmitting rotation of the drive gear to the hoop-shaped drive member.

However, variation in the tension of the chain occur thus altering precise drive of the reflector assemblies and in turn the efficiency of the solar concentrator

An aim of the invention is to provide an improved drive assembly.

To this end, the invention proposes a solar concentrator for a solar energy collector, said solar concentrator comprising at least one row of reflectors, said row extending along a longitudinal direction and being pivotally supported with respect to the ground to pivot around a longitudinal pivot axis, and a drive system for pivotally driving at least on reflector of said row, said drive system comprising:
- a hoop member having a peripheral surface extending around said pivot axis,
- a motor,
- a rotary drive member coupled to the motor,
- an elongated flexible transmission member wrapped around said peripheral surface and engaging the drive member,
   wherein the transmission member engages with at least one engagement member affixed to the peripheral surface such that the transmission member is diverted from the peripheral surface to engage the drive member between to points of the peripheral surface defining an angle with respect to the pivot axis equal or less than 60°, preferably equal or less than 30°, more preferably equal or less than 20°.

In other embodiments, the solar energy collector may comprise one or several of the following features, taken in isolation or in any technically feasible combination:
- two engaging members, the transmission member being diverted from the peripheral surface between the two engaging members;
- two engaging members define an angle with respect to the pivot axis equal or less than 60°, preferably equal or less than 30°, more preferably equal or less than 20°;
- a support device supporting the drive member and the or each engagement member;
- the support device is adjustable for adjusting tension in the transmission member;
- the support device comprises a first arm pivotally supporting drive member and a second arm pivotally supporting the or each engagement member, proximal ends of the first arm and the second arm being pivotally connected about a hinge axis to adjust a distance between the drive member and the or each engagement member;
- a spacing member for maintaining spacing between distal ends of the firs arm and the second arm;
- the spacing member is connected to each of the first arm and the second arm by a pin pivotally connected to said first arm and second arm about an axis parallel to the hinge axis;
- the spacing member is connected to each of the first arm and the second arm by a pin pivotally connected to said first arm and second arm about a pin axis parallel to the hinge axis;
- the spacing member is threaded and the support device comprises nut engaged on the spacing member for maintaining spacing between the pins along the spacing member;
- the hoop member is fixedly connected to a cradle pivotally supporting at least one reflector with respect to the ground;
- the hoop member comprises a rim defining the peripheral surface having a U-shaped cross-section defining a groove receiving the transmission member;
- a spoke extending across the rim;

The invention also relates to a solar collector comprising a receiver and a solar concentrator as defined above, namely a receiver for circulation of a heat transfer fluid.

The invention and its advantages will be better understood on reading the following description given solely by way of example and with reference to the appended drawings in which:
- Figure 1 and 2 are respectively an end view and a perspective view of a solar energy collector according to the invention, comprising a receiver and a solar concentrator;
- Figure 3 and 4 are respectively a perspective view and a front view of a connecting arrangement and a drive system of the solar concentrator for connecting and pivoting reflectors of a row of reflector of the solar concentrator;
- Figure 5 is a detail view of the drive system in zone V on Figure 4; and
- Figure 6 is a perspective view illustrating a support device of the drive system of Figure 5.

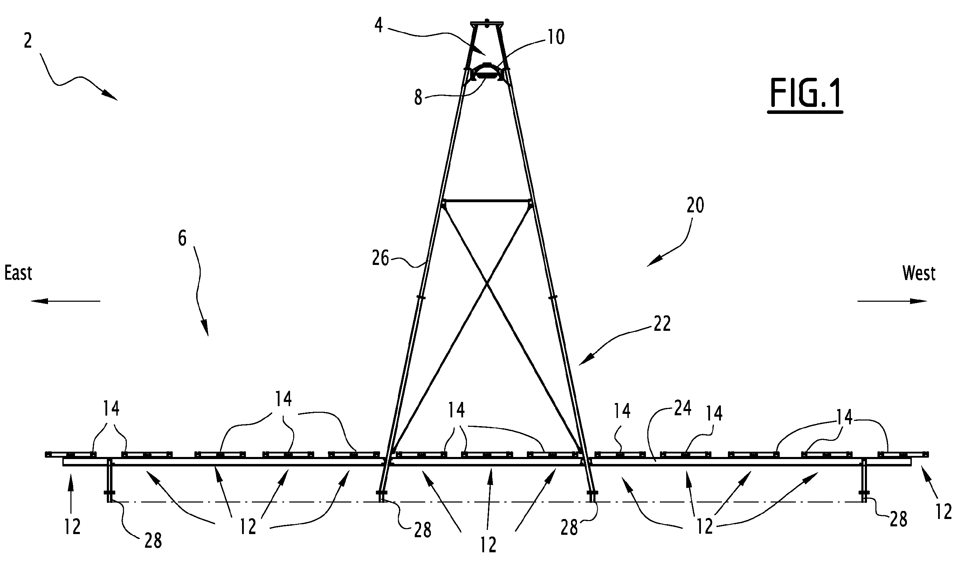

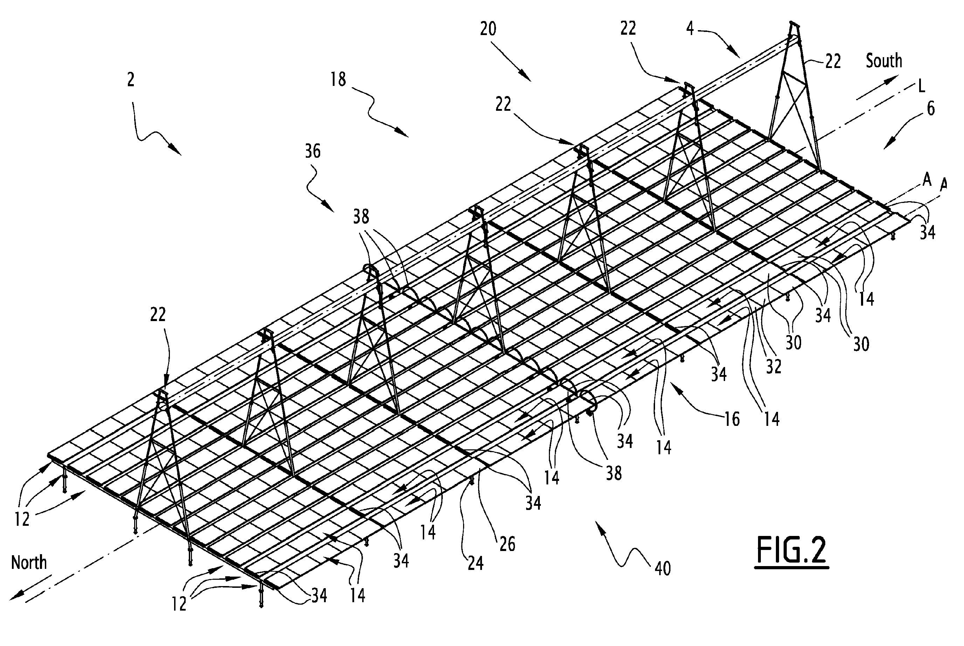

The solar energy collector 2 of Figures 1 and 2 comprises a receiver 4 for circulation of a heat transfer fluid and a solar concentrator 6 to concentrate solar energy on the receiver 4.

The solar energy collector 2 extends in a horizontal longitudinal direction L (Figure 2). The longitudinal direction L is oriented North-South. Alternatively, the longitudinal direction L may be oriented East-West.

The receiver 4 is configured for converting solar energy in thermal energy stored in the heat transfer fluid.

The receiver 4 is elevated above ground. The receiver 4 extends in the longitudinal direction L. The receiver 4 comprises a plurality of tubes 8 (Figure 1) for circulation of a heat transfer fluid and an inverted trough 10 (Figure 1). The tubes 8 extend parallel and side-by-side in the longitudinal direction L. The tubes 8 are accommodated and supported in the trough 10. The trough 10 has a downwardly opening aperture for the radiation reflected by the solar energy concentrator 6 to hit the tubes 8. The receiver 4 may have a window across the aperture.

The solar concentrator 6 is configured for reflecting and concentrating incident solar radiations upwardly on the receiver 4.

The solar concentrator 6 comprises rows 12 of reflectors 14 extending parallel and side-by-side in the longitudinal direction L. Each row 12 comprises several reflectors 14 aligned in the longitudinal direction L. Such a solar concentrator 6 is of the Linear Fresnel Reflector (LFR) type. The reflectors 14 in a row 12 are pivotally supported with respect to the ground about a horizontal pivot axis A-A parallel to the longitudinal direction L.

Each row 12 comprises at least one reflector assembly 16 comprising several reflectors 14 pivotally coupled about the common pivot axis A-A to rotate jointly. A reflector assembly may comprises two, four, six, height ore more reflectors 14. As illustrated on Figure 2, each reflector assembly 16 comprises six reflectors 14.

The solar energy collector 2 comprises segments 18 in which the reflectors 14 of each row 12 form a reflector assembly 16. Only one segment 18 of the solar energy collector 2 is illustrated on Figure 2.

The solar energy collector 2 comprises a support installation 20 supporting the reflectors 14 and the receiver 4. The support installation 20 comprises several support structures 22 spaced and distributed along the longitudinal direction L.

Each support structure 22 extends transversally and comprises a transverse horizontal support beam 24 supporting reflector 14 and a mast 26 supporting the receiver 4 above the reflectors 14. The support beam 24 and the mast 26 are mounted on in-ground pillars 28 of the support structure 18

Each reflector 14 extends in the span between two adjacent support structures 22 with the longitudinal ends 30 of the reflector 14 pivotally supported on the support beams 24 of said support structures 22 about the corresponding pivot axis A-A.

Each reflector 14 is elongated in the longitudinal direction L and comprises a frame (not visible), preferably a lightweight latticed structure, supporting one or several mirrors 32. The mirrors 32 may be planar mirror having a planar cross section or cylindrical-parabolic mirrors having a circular arc cross-section and form a line of focus at the receiver 4. The focal length may be approximately equal to the distance between each cylindrical-parabolic mirror and the receiver 4 or longer.

The solar concentrator 6 comprises cradles 34 pivotally supporting the reflector 14 on the support structures 18. Each cradle 34 located at the junction of a pair of reflector 14 pivotally couples said reflectors 14.

The solar concentrator 6 comprises a drive assembly 36 for pivotally driving the reflector 14 for tracking the diurnal sun's motion. The drive assembly 36 comprises a respective drive system 38 for pivotally driving each reflector assembly 16.

Each drive system 38 is located at the middle of a reflector assembly 16 at the junction between two adjacent reflectors 14. Each row has here three reflectors 14 on either sides of the drive system 36.

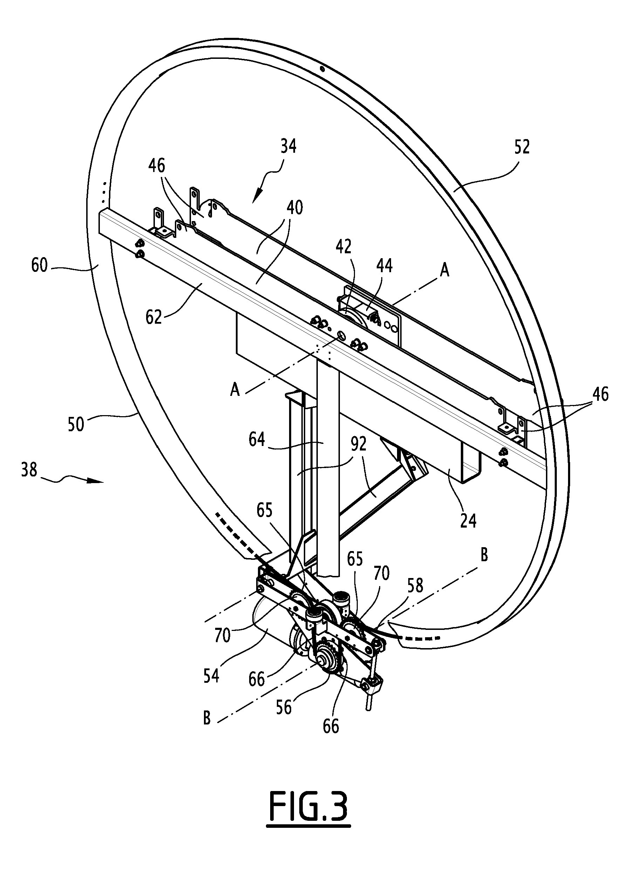

Figure 3 illustrates a cradle 34 for supporting adjacent longitudinal ends of two reflectors of a reflector assembly.

The cradle 34 comprises two parallel thin flexure plates 40 extending vertically and transversely. Each plate 40 is adapted for supporting a longitudinal end of a respective reflector. The cradles 34 comprises a rotation axle 42 extending along the pivot axis A-A between the two flexure plates 40 and pivotally coupling the flexure plates 40 about the pivot axis A-A. The cradle 34 comprises a bearing 44 for pivotally supporting the rotation axle 42 onto a support beam 20 (Figure 3). Each flexure plate 40 comprises two end portions 46 provided with fixing means for fixing a longitudinal end of a reflector assembly to the end portion 46.

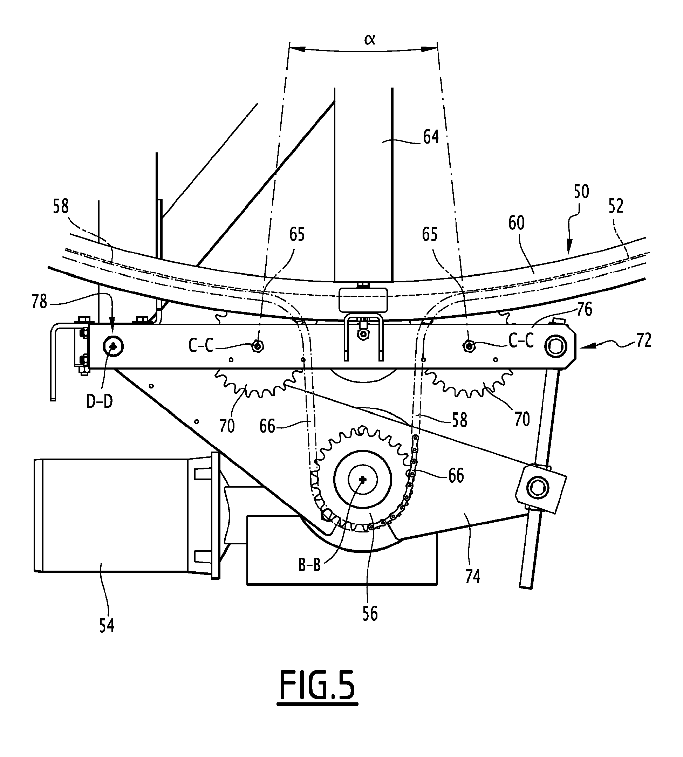

Figures 3 - 5 illustrate a drive device 38. The drive system 38 comprises a hoop 50 pivotally supported about the pivot axis A-A and coupled to the reflectors 14 and having a peripheral surface 52 extending around the pivot axis A-A, a motor 54, a rotary drive member 56 coupled to the motor 54 and an elongated flexible transmission member 58 wrapped around the drive member 56 and the hoop 50.

The hoop 50 is fixed to a flexure plate 40 of a cradle 34 and is thus pivotally mounted about the pivot axis A-A.

The hoop 50 comprises a circular rim 60 defining the peripheral surface 52. The rim 60 may have a U-shaped cross-section delimiting a groove receiving the transmission member 58. The rim 60 is partially cut-away on Figure 3 at the bottom to be allow to see the other elements of the drive system 38.

The hoop 50 comprises one cross spoke 62 extending diametrically across the rim 60 and a down spoke 64 extending radially from the middle of the cross spoke 62 to the rim 60. The cross spoke 62 is fixed to a flexure plate 40 of the cradle 32.

The drive member 56 is coupled to the motor 54 such that the motor 54 pivotally drives the drive member 56. The drive member 56 is pivotally supported about a drive axis B-B parallel to the pivot axis A-A.

The drive member 56 is spaced radially from the peripheral surface 52. The transmission member 58 is wrapped around the peripheral surface 52 and engages the drive member 56. The transmission member 58 is diverted from the peripheral surface 52 between two points 65 circumferentially spaced along the peripheral surface 52 to engage the drive member 56. The transmission member 52 leaves the peripheral surface 52 at each point 65. The transmission member comprises two strands 66 each extending between the peripheral surface 52 and the drive member 56. Each strand 66 joins the transmission member 58 at a point 65 at which the strand 66 contacts the peripheral surface 52.

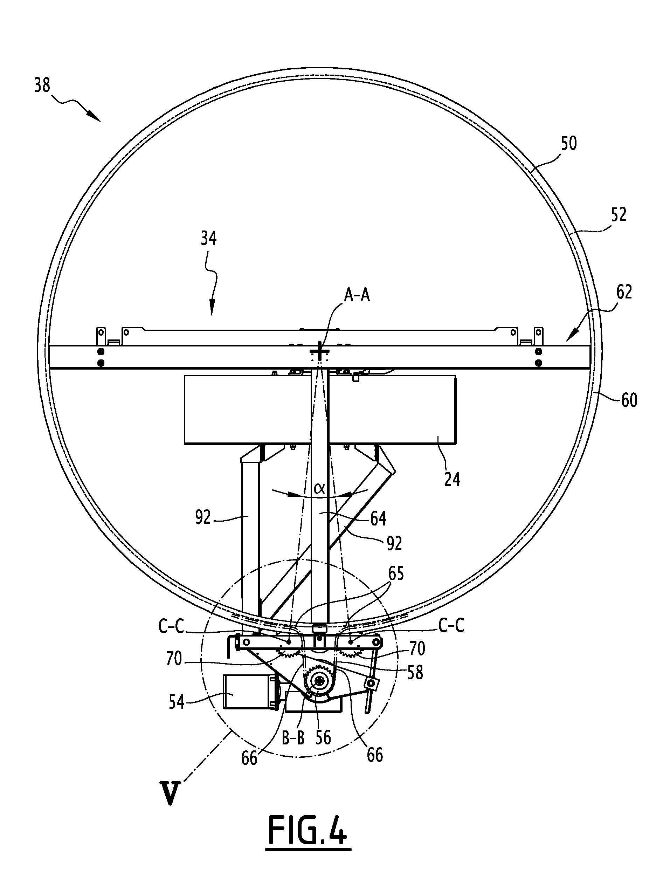

The angle α between the two points 65 with respect to the pivot axis A-A is less than 60°, preferably less than 30°, and more preferably less than 20° (Figure 4).

The transmission member 58 is adapted for transmitting rotation of the drive member 56 to the hoop 50 thus coupling the hoop 50 to the drive member 56.

The transmission member 58 may be preferably a chain, the drive member 56 being a toothed sprocket as in the illustrated embodiment, or alternatively a smooth or toothed belt, the drive member 56 being a toothed wheel or pulley frictionally engaging the belt.

The transmission member 58 is preferably fixed to the hoop 50 in one or several location(s) on the circumference of the peripheral surface 52 for pivotally driving the hoop 50.

The transmission member 58 is endless or open. In the latter case, the transmission member 58 has two opposed ends each being fixed to the hoop 50 for pivotally driving the hoop 50.

If the transmission member 58 is endless, the transmission member is thus wrapped around peripheral surface 52 of the hoop 50 on more that 300°, preferably more than 330°, and more preferably more than 340°.

The drive system 38 comprises at least one engagement member or idler member 70 affixed to the peripheral surface 52. Each strand 66 extends from an idler member 70 to the drive member 56. Each idler member 70 is pivotally supported about a respective idling axis C-C. Each idling axis C-C is parallel to the pivot axis A-A. The transmission member 58 is maintained on the peripheral surface 52 up to the joining point 68 by the idler member 70 and diverted from the peripheral surface 52 by the idler member 70 radially outwardly towards the drive member 56.

In the illustrated example, the drive system 38 comprises two idler members 70, each strand 66 extending between the drive member 56 and a respective idler member 70. The angle defined by the idling axes C-C with respect to the pivot axis A-A substantially corresponds to the angle α between the joining points 68. The angle α between the idling axes C-C with respect to the pivot axis A-A is less than 60°, preferably less than 30°, preferably less than 20°.

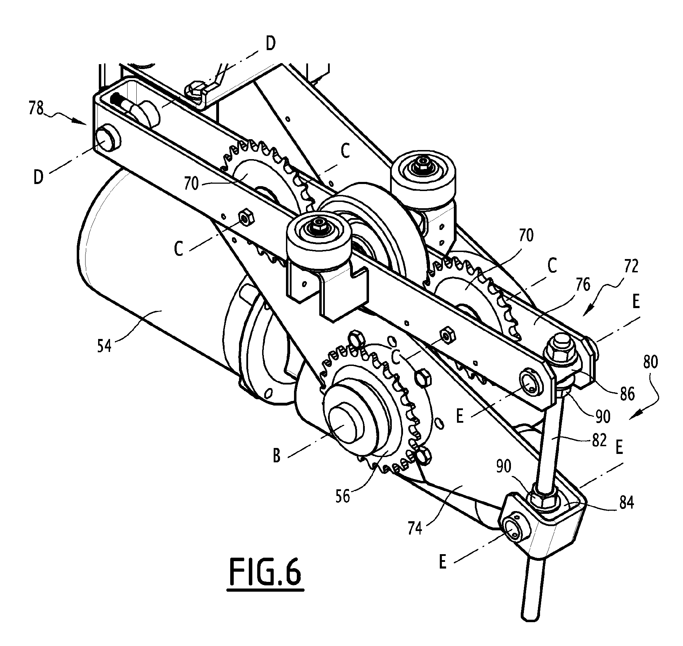

As better illustrated on Figure 6, the drive system 38 comprises an adjustable support device 72 supporting the drive member 56 and the idler member(s) 70 with allowing to adjust a distance between the drive member 56 and the idler member(s) 70.

The support device 72 comprises a first arm 74 and a second arm 76 having proximal ends pivotally connected by a hinge 78 about a hinge axis D-D. The drive member 56 is pivotally supported on the first arm 74 and the idler members 70 are pivotally supported on the second arm 76. Relative pivoting of the first arm 74 and the second arm 76 modify the distance between the drive member 56 and the idler member 70 thus adjusting the tension in the transmission member 58.

The support device 72 comprises a locking device 80 for angularly locking the first arm 74 and the second arm 76 one relative to the other about the hinge axis D-D. The locking device 80 comprises an elongated spacing member 82 extending between the first arm 74 and second arm 76 at a distance from the hinge 78. The spacing member 82 extends between distal ends of the first arm 74 and the second arm 76 opposite the proximal ends thereof.

The spacing member 82 is connected to each one of the first arm 74 and the second 76 by respectively a first pin 84 pivotally connected to the first arm 74 and a second pin 86 pivotally connected to the second arm 76 about pin axes E-E parallel to the hinge axis D-D.

The position of at least one of the first pin 84 and the second pin 86 along the spacing member 82 can be adjusted to adjust the angular relative position of the first arm 74 and the second arm 76 about the hinge axis D-D and thus the tension in the transmission member 58.

In the illustrated embodiment, the spacing member 82 is externally threaded and tensioning nuts 90 are engaged on the spacing member 82 to adjust and maintain the spacing between the first pin 84 and the second pin 86.

The support device 72 comprises fixing members 92 for fixing the support device 72 to a support beam 24. As illustrated, the support device 72 comprises two fixing members 92 rigidly connecting the first arm 74 to a support beam 24. The fixing members 92 extend from the proximal end of the first arm 74 upwardly to the support beam 24 with diverging one from the other and forming a V shape.

Owing to the invention, the transmission member 58 is kept affixed to the hoop 50 on a large angular extend and only a limited length of the transmission member extends away from the hoop 50. As a result, the transmission member 58 is protected from the harsh outdoor environment thus resulting in improved driving of the reflector assemblies 16. Appropriate tension is maintained in the transmission member 58. Besides, the drive member allows easily adjusting the tension in the transmission member 58 by adjusting the angle between the first arm and the second arm of the support device.

The driving of the reflectors 14 is improved and concurrently the efficiency of the solar energy collector.

## Claims

1. A solar concentrator (6) for a solar energy collector (2), said solar concentrator comprising at least one row (12) of reflectors (14), said row extending along a longitudinal direction (L) and being pivotally supported with respect to the ground to pivot around a longitudinal pivot axis (A-A), and a drive system (38) for pivotally driving at least on reflector (14) of said row (12), said drive system (38) comprising:
- a hoop member (50) having a peripheral surface 52 extending around said pivot axis (A-A),
- a motor (54)
- a rotary drive member (56) coupled to the motor (54),
- an elongated flexible transmission member (58) wrapped around said peripheral surface (52) and engaging the drive member (56),
wherein the transmission member (58) engages with at least one engagement member (70) affixed to the peripheral surface (52) such that the transmission member (58) is diverted from the peripheral surface to engage the drive member (56) between to points (68) of the peripheral surface (52) defining an angle (α) with respect to the pivot axis (A-A) axis equal or less than 60°, preferably equal or less than 30°, more preferably equal or less than 20°.

2. Solar concentrator as in claim 1, comprising two engaging members (70), the transmission member (58) being diverted from the peripheral surface between the two engaging members (70).

3. Solar concentrator as in claim 2, wherein two engaging members (70) define an angle (α) with respect to the pivot axis (A-A) axis equal or less than 60°, preferably equal or less than 30°, more preferably equal or less than 20°.

4. Solar concentrator as in any preceding claim, comprising a support device supporting the drive member (56) and the or each engagement member (70).

5. Solar concentrator as in claim 4, wherein the support device is adjustable for adjusting tension in the transmission member (58).

6. Solar concentrator as in claim 5, wherein the support device comprises a first arm pivotally supporting drive member (56) and a second arm pivotally supporting the or each engagement member (70), proximal ends of the first arm and the second arm being pivotally connected about a hinge axis (D-D) to adjust a distance between the drive member (56) and the or each engagement member (70).

7. Solar concentrator as in claim 6, comprising a spacing member for maintaining spacing between distal ends of the firs arm and the second arm.

8. Solar concentrator as in claim 7, wherein the spacing member is connected to each of the first arm and the second arm by a pin pivotally connected to said first arm and second arm about an axis parallel to the hinge axis (D-D).

9. Solar concentrator as in claim 8, wherein the spacing member is connected to each of the first arm and the second arm by a pin pivotally connected to said first arm and second arm about a pin axis (E-E) parallel to the hinge axis (D-D).

10. Solar concentrator as in claim 9, wherein the spacing member is threaded and the support device comprises nut engaged on the spacing member for maintaining spacing between the pins along the spacing member.

11. Solar concentrator as in any preceding claim, wherein the hoop member (50) is fixedly connected to a cradle pivotally supporting at least one reflector (14) with respect to the ground.

12. Solar concentrator as in any preceding claim, wherein the hoop member (50) comprises a rim defining the peripheral surface having a U-shaped cross-section defining a groove receiving the transmission member (58).

13. Solar concentrator as in claim 12, comprising a spoke extending across the rim.

14. Solar energy collector, comprising a receiver and a solar concentrator as in any preceding claim for concentrating solar radiation to the receiver.

15. Solar energy collector as in claim 14, wherein the receiver is for circulation of a heat transfer fluid.
